# EUROPÄISCHE PATENTANMELDUNG

(11) **EP 4 821 882 A2**
(43) Veröffentlichungstag der Anmeldung: **14.10.2026**
(21) Anmeldenummer: 26171426.5
(22) Anmeldetag: 09.04.2026
(51) Int. Cl.: C01B 3/047

(54) **AMMONIAK-CRACKING-ANLAGE**

(30) Priorität: 10.04.2025 DE 102025114129
(71) Anmelder: RWE Technology International GmbH, 45141 Essen (DE)
(72) Erfinder: Obladen, Marc, 45141 Essen (DE); Beckmann, Josef, 45141 Essen (DE)
(74) Vertreter: Cohausz & Florack

(57) **Zusammenfassung**

Die Erfindung betrifft eine Ammoniak-Cracking-Anlage (200, 300), umfassend mindestens einen Cracking-Reaktor (202, 302) mit einem Fluideingang (204, 304) und einem Fluidausgang (206, 306), eingerichtet zum Generieren von Wasserstoff, basierend auf über den Fluideingang (204, 304) zugeführtem Ammoniak, mindestens einen Brennraum (212, 312), eingerichtet zum Bereitstellen von Wärme für den Cracking-Reaktor (202, 302) durch Verbrennen mindestens eines Brennstoffs, wobei die Ammoniak-Cracking-Anlage (200, 300) mindestens einen Elektroerhitzer (230, 330, 340, 388) umfasst, eingerichtet zum Bereitstellen von Wärme für den Cracking-Reaktor (202, 302) durch Umwandeln von elektrischen Energie in Wärme.

## Beschreibung

Die Erfindung betrifft eine Ammoniak-Cracking-Anlage, umfassend mindestens einen Cracking-Reaktor mit einem Fluideingang und einem Fluidausgang, wobei der Cracking-Reaktor eingerichtet ist zum Generieren von Wasserstoff, basierend auf über den Fluideingang zugeführtem Ammoniak, mindestens einen Brennraum, eingerichtet zum Bereitstellen von Wärme für den Cracking-Reaktor durch Verbrennen mindestens eines Brennstoffs.

Wasserstoff, insbesondere Wasserstoffgas, wird in der heutigen Zeit vermehrt als Energieträger oder als Prozessgas eingesetzt. Wasserstoff kann aus Wasser durch Elektrolyse hergestellt werden. Bei der wasserbasierten Elektrolyse wird unter Anwendung von elektrischer Energie bzw. Leistung eine Redoxreaktion erzwungen und hierdurch Wasserstoff generiert.

Der erzeugte bzw. produzierte Wasserstoff kann dann z.B. in geeigneten Wasserstoffspeichern zwischengespeichert und/oder in ein Wasserstoffnetz bzw. Pipelinenetz eingespeist werden. Der produzierte oder gespeicherte Wasserstoff kann zum Beispiel in elektrische Energie gewandelt werden, beispielsweise mittels einer Wasserstoffvorrichtung in Form einer Wasserstoff-Brennstoffzelle (auch als umgekehrte Elektrolyse bezeichnet) oder durch Verbrennung in einer Wasserstoffvorrichtung in Form eines Gaskraftwerk. Dies kann insbesondere dann erfolgen, wenn festgestellt wird, dass mehr Leistung aus einem elektrischen Versorgungsnetz entnommen wird, als durch andere Erzeuger insbesondere in Form von regenerativen Erzeugern zur gleichen Zeit in das Versorgungsnetz eingespeist wird.

Es versteht sich, dass der Wasserstoff in anderen Wasserstoffvorrichtungen auch für andere chemische Prozesse verwendet werden kann.

Wasserstoff hat demnach viele Vorteile, jedoch auch einen Nachteil. Der Transport von Wasserstoff ist sehr aufwendig und komplex. Denkbar ist beispielsweise, dass eine Wasserstoffproduktionsanlage in einem Gebiet mit einer hohen Sonnenwahrscheinlichkeit errichtet ist und demnach mit elektrischer Energie aus einer Photovoltaikanlage bzw. einem Photovoltaikpark betrieben wird. Entsprechendes kann in Kombination mit einem Windpark erfolgen. In CO2-armer Weise kann Wasserstoff hergestellt werden.

Der so mittels Energie aus einer erneuerbaren Energiequelle bzw. mindestens einem regenerativen Erzeuger hergestellte Wasserstoff kann dann zu einem entfernt angeordneten Wasserstoffabnehmer bzw. einer Wasserstoffzielentität transportiert werden. Grundsätzlich kann ein Transport von Wasserstoff in flüssiger Form mittels eines Transportfahrzeugs erfolgen, wie ein Wasserstofftransportschiff. Dies ist insbesondere dann denkbar, wenn die Entfernung zwischen dem Wasserstoffabnehmer und der Wasserstoffproduktionsanlage für eine Wasserstoffpipeline zu groß ist. Der Transport von flüssigem Wasserstoff ist jedoch sehr aufwendig und komplex und geht insbesondere mit entsprechend hohen Kosten einher.

Eine alternative und insbesondere weniger aufwendig und komplexe Transportlösung ist der Transport von Ammoniak. Hierzu ist zunächst eine Umwandlung des produzierten Wasserstoffs in Ammoniak erforderlich. Beispielsweise kann Ammoniak mittels des Haber-Bosch-Verfahrens hergestellt werden, bei dem der produzierte Wasserstoff mit Stickstoff reagiert (beispielsweise bei Temperaturen zwischen 300 °C und 550 °C und einem Druck von 20 MPa bis 35 MPa in Anwesenheit eines Katalysators, wie eines Eisenoxidkatalysators). Es versteht sich, dass andere Methoden eingesetzt werden können.

Das hergestellte Ammoniak kann signifikant einfacher transportiert werden als flüssiger Wasserstoff, insbesondere aufgrund der volumetrischer Energiedichte des hergestellten Ammoniaks. So lässt sich der flüssige Zustand bei Ammoniak bereits bei -33 °C erreichen, während bei Wasserstoff eine Temperatur von -253 °C erforderlich ist.

Beispielsweise in der Nähe zu einem Wasserstoffabnehmer kann eine Ammoniak-Cracking-Anlage errichtet sein. Mittels der Ammoniak-Cracking-Anlage kann das (transportierte) Ammoniak wieder in Wasserstoff umgewandelt werden, insbesondere in Wasserstoff und Stickstoff aufgespalten werden.

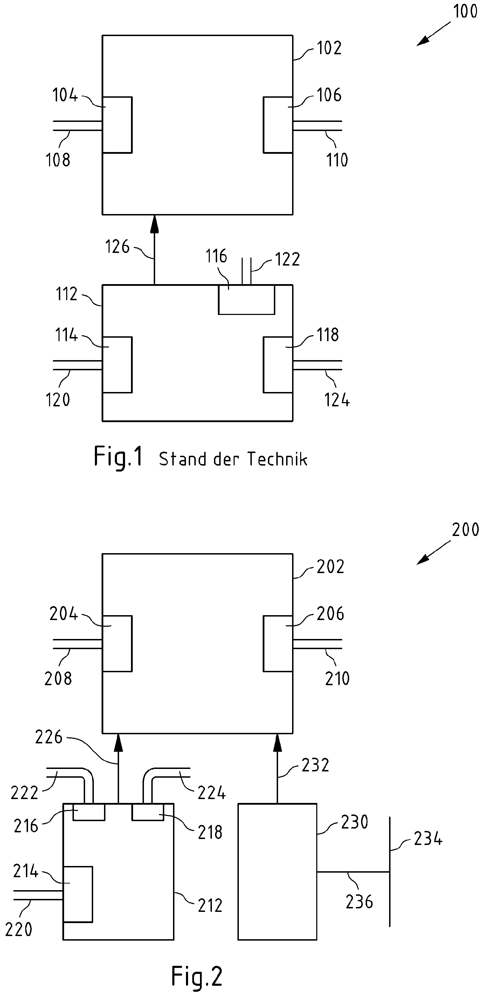

Die Figur 1 zeigt eine schematische Ansicht eines Beispiels einer typischen Ammoniak-Cracking-Anlage 100 des Stands der Technik. Die Ammoniak-Cracking-Anlage 100 umfasst einen Cracking-Reaktor 102 und einen Brennraum 112. Über eine Fluideingangsleitung 108 und einen Fluideingang 104 des Cracking-Reaktors 102 kann Ammoniak in den Cracking-Reaktor 102 geleitet werden. Der Cracking-Reaktor 102 ist eingerichtet zum Generieren von Wasserstoff bzw. zur Synthese von Wasserstoff, basierend auf über den Fluideingang 104 zugeführtem Ammoniak und insbesondere zugeführter Wärme.

Insbesondere wird der Cracking-Reaktor 102 mit einer vordefinierten Temperatur betrieben, beispielsweise zwischen 700 °C und 800 °C, um das zugeführte Ammoniak aufzuspalten, insbesondere in Wasserstoff und Stickstoff. Der erzeugte Wasserstoff kann über einen Fluidausgang 106 des Cracking-Reaktors 102 und einer Fluidausgangsleitung 110 aus dem Cracking-Reaktor 102 geleitet werden, beispielsweise zu einem Wasserstoffabnehmer.

Die für den Betrieb des Cracking-Reaktors 102 mit der vordefinierten Temperatur erforderliche Wärme wird im Stand der Technik durch einen Brennraum 112 bereitgestellt. Die Wärmeübertragung ist angedeutet durch den Pfeil 126. Der Brennraum 112 weist mindestens einen Brennstoffeingang 114 auf, wobei Brennstoff über eine Brennstoffeingangsleitung 120 und dem Brennstoffeingang 114 dem Brennraum 112 zugeführt wird. Beispielsweise kann im Stand der Technik der Brennstoff Erdgas, Ammoniak und/oder ein Teil des hergestellten Wasserstoffs sein.

Um den Brennstoff in dem Brennraum 112 zu verbrennen und hierdurch Wärme zu erzeugen, kann Verbrennungsluft über eine Zuführleitung 122 und einen Verbrennungslufteingang 116 des Brennraums 112 zugeführt werden. Das aus der Verbrennung resultierende Rauchgasgemisch kann über einen Rauchgasausgang 118 des Brennraums 112 und eine Rauchgasausgangsleitung 124 abgeführt werden.

Nachteilig an einer derartigen Ammoniak-Cracking-Anlage des Stands der Technik ist, dass als Brennstoff Edukte, wie grünes (bzw. mit Energie aus regenerativen Erzeugern hergestelltes) Ammoniak (NH3) oder grüner (bzw. mit Energie aus regenerativen Erzeugern hergestellter) Wasserstoff (H2), genutzt werden, die jedoch sehr kostenintensiv sind. Alternativ oder zusätzlich ist im Stand der Technik der Einsatz von fossilen Brennstoffen bzw. Energieträgern bekannt, wie Erdgas. Die Umweltbilanz (insbesondere der CO2-Fußabdruck) des hergestellten Wasserstoffs verschlechtert sich bei einem Einsatz von Erdgas oder ähnlichen fossilen Brennstoffen. Dies kann dazu führen, dass der Wasserstoff nicht mehr als umweltfreundlich bzw. "grün" zertifiziert werden kann. Für eine solche Zertifizierung wird im Stand der Technik in der Regel auf umweltfreundliche bzw. grüne Edukte und Produkte zurückgegriffen, wie grünes (bzw. mit Energie aus regenerativen Erzeugern hergestelltes) Ammoniak (NH3) oder grüner (bzw. mit Energie aus regenerativen Erzeugern hergestellter) Wasserstoff (H2). Die Verwendung dieser Edukte und/oder Produkte bedeutet jedoch eine deutliche Verteuerung des hergestellten Endproduktes, also des Wasserstoffs.

Daher liegt der Erfindung die Aufgabe zugrunde, eine Ammoniak-Cracking-Anlage bereitzustellen, bei der die Nachteile des Stands der Technik zumindest reduziert sind und welche insbesondere einen umweltfreundlicheren und gleichzeitig günstigeren Betrieb der Ammoniak-Cracking-Anlage ermöglicht.

Die Aufgabe wird gemäß einem ersten Aspekt der Erfindung gelöst durch eine Ammoniak-Cracking-Anlage nach Anspruch 1. Die Ammoniak-Cracking-Anlage umfasst mindestens einen Cracking-Reaktor. Der Cracking-Reaktor umfasst einen Fluideingang und einen Fluidausgang. Der Cracking-Reaktor ist eingerichtet zum Generieren von Wasserstoff, basierend auf über den Fluideingang zugeführtem Ammoniak. Die Ammoniak-Cracking-Anlage umfasst mindestens einen Brennraum. Der Brennraum ist eingerichtet zum Bereitstellen von Wärme für den Cracking-Reaktor durch Verbrennen mindestens eines Brennstoffs. Die Ammoniak-Cracking-Anlage umfasst mindestens einen Elektroerhitzer. Der mindestens eine Elektroerhitzer ist eingerichtet zum Bereitstellen von Wärme für den Cracking-Reaktor durch Umwandeln von elektrischer Energie in Wärme.

Im Gegensatz zum Stand der Technik werden erfindungsgemäß die Nachteile des Stands der Technik zumindest reduziert und insbesondere ein umweltfreundlicherer und gleichzeitig günstigerer Betrieb der Ammoniak-Cracking-Anlage ermöglicht, indem eine Ammoniak-Cracking-Anlage bereitgestellt wird, welche mindestens einen Elektroerhitzer umfasst, eingerichtet zum Bereitstellen von Wärme für den Cracking-Reaktor durch Umwandeln von elektrischer Energie in Wärme. Indem zumindest teilweise anstelle eines (grünen bzw. mit Energie aus regenerativen Erzeugern hergestelltes) Edukts, wie (grüner) Ammoniak (NH3) oder (grüner) Wasserstoff (H2), oder eines fossilen Brennstoffs, wie Erdgas, elektrische Energie zum Generieren von Wärme verwendet wird, wobei vorzugsweise die verwendete elektrische Energie aus einer erneuerbaren Energiequelle stammt, kann in umweltfreundlicher und insbesondere kostengünstiger Weise eine Ammoniak-Cracking-Anlage betrieben werden.

Die erfindungsgemäße Ammoniak-Cracking-Anlage dient zum Generieren bzw. Produzieren von Wasserstoff. Insbesondere dient die Ammoniak-Cracking-Anlage zur Synthese von Wasserstoff.

Die erfindungsgemäße Ammoniak-Cracking-Anlage umfasst mindestens einen Cracking-Reaktor. Der Cracking-Reaktor ist insbesondere eingerichtet zum thermischen Cracken von Ammoniak, also unter Anwendung von thermischer Energie. Das Ammoniak kann dem Cracking-Reaktor über mindestens einen Fluideingang des Cracking-Reaktors zugeführt werden. Insbesondere kann das Ammoniak von einer Ammoniakquelle insbesondere der Ammoniak-Cracking-Anlage (beispielsweise ein Ammoniakzwischenspeicher der Ammoniak-Cracking-Anlage) (mittelbar oder unmittelbar) über eine Fluideingangsleitung der Ammoniak-Cracking-Anlage und den Fluideingang in den Cracking-Reaktor eingeleitet werden, insbesondere in einen Reaktorraum des Cracking-Reaktors.

Gemäß einer bevorzugten Ausführungsform der erfindungsgemäßen Ammoniak-Cracking-Anlage kann die Ammoniak-Cracking-Anlage mindestens eine Vorwärmvorrichtung umfassen. Die Vorwärmvorrichtung kann zwischen der Ammoniakquelle und dem Cracking-Reaktor zwischengeschaltet sein. Die Vorwärmvorrichtung kann eingerichtet sein zum Vorwärmen von flüssigem Ammoniak, der insbesondere durch die Ammoniakquelle bereitgestellt wird. Der vorgewärmte Ammoniak kann über die Fluideingangsleitung und den Fluideingang in den Cracking-Reaktor eingeleitet werden.

Der Cracking-Reaktor umfasst mindestens einen Fluidausgang. Über den mindestens einen Fluidausgang kann zumindest der generierte Wasserstoff bzw. das Wasserstoffgemisch, enthaltend zumindest den generierten Wasserstoff, aus dem Cracking-Reaktor abgeführt werden. Insbesondere kann eine Fluidausgangsleitung der Ammoniak-Cracking-Anlage mit dem Fluidausgang verbunden sein. Über die Fluidausgangsleitung kann das Wasserstoffgemisch (z.B. enthaltend Wasserstoff, Stickstoff und Ammoniak) zumindest mittelbar an eine Wasserstoffzielentität (z.B. ein Wasserstoffzwischenspeicher, ein Wasserstoffpipelinenetz, ein Wasserstofftransportfahrzeug etc.) und/oder einen Wasserstoffabnehmer geleitet werden.

Gemäß einer bevorzugten Ausführungsform der erfindungsgemäßen Ammoniak-Cracking-Anlage kann die Ammoniak-Cracking-Anlage mindestens eine Wasserstoffseparationsvorrichtung bzw. Wasserstoffreinigungsvorrichtung umfassen. Der durch den Cracking-Reaktor erzeugte Wasserstoff bzw. das durch den Cracking-Reaktor erzeugte Wasserstoffgemisch kann über die Fluidausgangsleitung zu der Wasserstoffseparationsvorrichtung geleitet werden. Die Wasserstoffseparationsvorrichtung kann eingerichtet sein zum Aufreinigen bzw. Reinigen des durch den Cracking-Reaktor generierten Wasserstoffs bzw. Wasserstoffgemisches. Beispielsweise kann das Reinigen ein Trocken des Wasserstoffgemisches und/oder Komprimieren des Wasserstoffgemisches und/oder ein Durchführen einer Druckwechseladsorption (PSA), ein Durchführen einer Membrantrennung und/oder eine elektrochemische Trennung und/oder dergleichen umfassen.

Optional kann die Ammoniak-Cracking-Anlage eine Fluidverbindung bzw. mindestens eine Fluidleitung zu dem mindestens einen Brennraum umfassen, um beispielsweise einen Teil des generierten Wasserstoffs als Brennstoff zu dem Brennraum zu leiten. Alternativ oder zusätzlich kann die Ammoniak-Cracking-Anlage eine Fluidverbindung bzw. mindestens eine Fluidleitung zu dem mindestens einen Brennraum umfassen, um beispielsweise einen Teil des Ammoniaks als Brennstoff zu dem Brennraum zu leiten.

Der Cracking-Reaktor ist eingerichtet zum Generieren von Wasserstoff, insbesondere unter Anwendung von Wärme (und insbesondere Druck) auf das eingeleitete Ammoniak. Insbesondere kann der Cracking-Reaktor (insbesondere der Reaktorraum) zum Cracken bzw. Aufspalten des Ammoniaks mit einer vordefinierten Temperatur betrieben werden. Die vordefinierte Temperatur, die auch einen Temperaturbereich (z.B. vordefinierte Temperatur mit Toleranzbereich) umfasst, kann vorzugsweise zwischen 700 °C und 800 °C liegen.

Ferner umfasst die Ammoniak-Cracking-Anlage mindestens einen Brennraum. Der Brennraum ist eingerichtet zum Bereitstellen von Wärme für den Cracking-Reaktor durch Verbrennen mindestens eines Brennstoffs. Mit anderen Worten, der Cracking-Reaktor, insbesondere der Reaktorraum, kann durch das Verbrennen mindestens eines Brennstoffs in dem Brennraum beheizt werden.

Der mindestens eine Brennstoff kann ausgewählt sein aus Ammoniak, (durch die Ammoniak-Cracking-Anlage produzierter) Wasserstoff, Erdgas, Gemische hiervon und/oder dergleichen. Bevorzugt kann der Brennstoff nur auswählbar sein aus Wasserstoff, einem Wasserstoffgemisch und/oder Ammoniak.

Insbesondere kann ein Brennraum mindestens einen Brennstoffeingang aufweisen. Der mindestens eine Brennstoff kann über eine Brennstoffeingangsleitung und dem Brennstoffeingang dem Brennraum zugeführt werden. Vorzugsweise können zwei oder mehr Brennstoffeingänge vorgesehen sein, um insbesondere unterschiedliche Brennstoffe (z.B. Ammoniak und Wasserstoff) zuzuführen.

Um den Brennstoff in dem Brennraum zu verbrennen und hierdurch Wärme bzw. thermische Energie zu erzeugen, kann Verbrennungsluft über eine Zuführleitung der Ammoniak-Cracking-Anlage und einen Verbrennungslufteingang des Brennraums zugeführt werden. Das aus der Verbrennung resultierende Rauchgasgemisch kann über einen Rauchgasausgang des Brennraums und eine Rauchgasausgangsleitung (mittelbar oder unmittelbar) abgeführt werden, beispielsweise zu einem Schornstein der Ammoniak-Cracking-Anlage. Die erzeugte Wärme bzw. thermische Energie wird an den Cracking-Reaktor übertragen, insbesondere den Reaktorraum.

Vorzugsweise kann die Ammoniak-Cracking-Anlage mindestens eine Wärmerückgewinnungsvorrichtung umfassen. Insbesondere kann das Rauchgasgemisch von dem Rauchgasausgang über die Rauchgasausgangsleitung zu der Wärmerückgewinnungsvorrichtung geleitet werden. Die Wärmerückgewinnungsvorrichtung kann eingerichtet sein zum Behandeln, beispielsweise Reinigen, des bei der Verbrennung des mindestens einen Brennstoffs gebildeten Rauchgasgemisches. Das gereinigte Rauchgas kann insbesondere über einen Schornstein der Ammoniak-Cracking-Anlage in die Umgebung abgeführt werden.

Erfindungsgemäß umfasst die Ammoniak-Cracking-Anlage mindestens einen Elektroerhitzer. Ein Elektroerhitzer meint vorliegend insbesondere einen elektrisch betriebenen Erhitzer bzw. Erwärmer. Der mindestens eine Elektroerhitzer ist eingerichtet zum Bereitstellen von Wärme bzw. thermische Energie für den Cracking-Reaktor durch Umwandeln von elektrischer Energie in Wärme. Mit anderen Worten, elektrische Energie wird durch einen erfindungsgemäßen Elektroerhitzer in thermische Energie bzw. Wärmeenergie gewandelt. Die Wärmeenergie des Elektroerhitzers kann insbesondere mittelbar oder unmittelbar dem Cracking-Reaktor zugeführt wird, also insbesondere an den Reaktorraum übertragen werden.

Mit anderen Worten, neben dem Brennraum, insbesondere eingerichtet zum Temperieren (insbesondere Erhitzen) des Cracking-Reaktors, ist auch mindestens ein Elektroerhitzer der Ammoniak-Cracking-Anlage vorgesehen, eingerichtet zum Temperieren (insbesondere Erhitzen) des Cracking-Reaktors.

Insbesondere kann zumindest 30 % der erforderlichen Gesamtwärme zum Betreiben des Cracking-Reaktors, beispielsweise während eines definierten Zeitraums (z.B. 0,25 h bis 2 Wochen), durch den mindestens einen Elektroerhitzer (in Form einer zweiten Energiemenge) generiert und bereitgestellt werden, vorzugsweise zumindest 50 %, besonders bevorzugt zumindest 80 % bis 100%.

Der Brennstoffverbrauch des Brennraums kann signifikant reduziert werden. Insbesondere kann auf den Einsatz von Erdgas komplett verzichtet werden. In CO2-armer Weise kann die Ammoniak-Cracking-Anlage und Wasserstoff aus Ammoniak generiert werden.

Gemäß einer weiteren Ausführungsform der erfindungsgemäßen Ammoniak-Cracking-Anlage kann der mindestens eine Elektroerhitzer mindestens einen ersten Elektroerhitzer umfassen. Der erste Elektroerhitzer kann an dem Cracking-Reaktor angeordnet sein. Der Elektroerhitzer kann die durch den Elektroerhitzer erzeugte Wärme bzw. Wärmeenergie zumindest nahezu direkt an den Cracking-Reaktor übertragen, insbesondere an den mindestens einen Reaktorraum des Cracking-Reaktors.

Gemäß einer bevorzugten Ausführungsform der erfindungsgemäßen Ammoniak-Cracking-Anlage kann der erste Elektroerhitzer in dem Cracking-Reaktor integriert sein, beispielsweise in einer Reaktorwand, die insbesondere an den Reaktorraum des Cracking-Reaktors angrenzt und ihn insbesondere umschließt. Eine besonders nahe Positionierung des mindestens einen Elektroerhitzers an dem Reaktorraum, der mit einer vordefinierten Temperatur zu beheizen ist, kann erreicht werden. Eine möglichst direkte und damit insbesondere besonders verlustarme Wärmeübertragung von dem ersten Elektroerhitzer an den Reaktorraum bzw. das darin befindliche Ammoniak kann bereitgestellt werden.

Gemäß einer besonders bevorzugten Ausführungsform der erfindungsgemäßen Ammoniak-Cracking-Anlage kann der erste Elektroerhitzer ein Induktionserhitzer (auch als Induktionsheizung bezeichnet) sein. Ein Induktionserhitzer kann (in einfacher Weise) in dem Cracking-Reaktor integriert werden, beispielsweise in der genannten Reaktorwand des mindestens einen Reaktorraums des Cracking-Reaktors. Eine besonders effiziente und insbesondere zielgerichtete Umwandlung von elektrischer Energie in thermische Energie für den Betrieb des Cracking-Reaktors kann bereitgestellt werden.

Gemäß einer weiteren Ausführungsform der erfindungsgemäßen Ammoniak-Cracking-Anlage kann der Brennraum mindestens einen Verbrennungslufteingang umfassen. Der Verbrennungslufteingang kann eingerichtet sein zum Zuführen von Verbrennungsluft in den Brennraum. Der mindestens eine Elektroerhitzer kann einen zweiten Elektroerhitzer umfassen. Der zweite Elektroerhitzer kann eingerichtet sein zum Erwärmen der (über den mindestens einen Verbrennungslufteingang) zugeführten Verbrennungsluft. Der zweite Elektroerhitzer kann insbesondere eingerichtet sein zum mittelbaren Temperieren (insbesondere Erhitzen) des Cracking-Reaktors, insbesondere des Reaktorraums. Indem die Verbrennungsluft durch den zweiten Elektroerhitzer (vor-)erwärmt wird, kann der Brennstoffverbrauch des Brennraums noch weiter reduziert werden. Insbesondere kann die Verbrennungsluft derart vorerwärmt werden durch den zweiten Elektroerhitzer, dass eine Verbrennung eines Brennstoffs durch den Brennraum (zumindest zeitweise) entfallen kann.

Besonders bevorzugt kann die Ammoniak-Cracking-Anlage mindestens einen ersten Elektroerhitzer und mindestens einen zweiten Elektroerhitzer umfassen. Mit anderen Worten, es können zumindest zwei Elektroerhitzer in der Ammoniak-Cracking-Anlage vorgesehen sein.

Gemäß einer bevorzugten Ausführungsform der erfindungsgemäßen Ammoniak-Cracking-Anlage kann der zweite Elektroerhitzer in einer Zuführleitung angeordnet sein. Wie beschrieben wurde, kann die Zuführleitung mit dem Verbrennungslufteingang verbunden sein. Die Zuführleitung kann eingerichtet sein zum Leiten der Verbrennungsluft zu dem Verbrennungslufteingang. Mit anderen Worten, die (benötigte) Verbrennungsluft kann durch die Zuführleitung strömen, durch den mindestens einen zweiten Elektroerhitzer, der in der Zuführleitung integriert ist, (vor-)erwärmt werden und in den Brennraum strömen. In effizierter Weise kann durch eine entsprechende Anordnung die Verbrennungsluft erwärmt werden.

Bei weiteren Varianten können weitere Lufteingänge, z.B. mit weiteren Zuführleitungen, an der Cracking-Anlage vorgesehen sein. Vorzugsweise kann an bzw. in jeder der weiteren Zuführleitungen ein weiterer Elektroerhitzer angeordnet sein.

Es versteht sich, dass ein Lufteingang und eine Zuführleitung durch ein gemeinsames Bauelement gebildet sein können.

Wie bereits beschrieben wurde, kann die Ammoniak-Cracking-Anlage vorzugsweise eine Wärmerückgewinnungsvorrichtung umfassen, in der das Rauchgasgemisch behandelt werden kann, insbesondere gereinigt werden kann. Das in die Wärmerückgewinnungsvorrichtung geleitete bzw. strömende Rauchgasgemisch weist aufgrund der erfolgten Verbrennung in dem Brennraum zumindest eine höhere Temperatur auf als die aus der Umgebung angesaugte Verbrennungsluft.

Gemäß einer weiteren Ausführungsform der erfindungsgemäßen Ammoniak-Cracking-Anlage kann die (Verbrennungsluft-)Zuführleitung durch die Wärmerückgewinnungsvorrichtung geführt sein. Insbesondere kann die Zuführleitung derart durch die Wärmerückgewinnungsvorrichtung geführt sein, dass die Zuführleitung zumindest teilweise durch das Rauchgasgemisch umströmt wird. Beispielsweise kann die Zuführleitung innerhalb der Wärmerückgewinnungsvorrichtung zumindest teilweise schleifenförmig bzw. mäanderförmig verlaufen. Die Wärmerückgewinnungsvorrichtung kann zum Vorwärmen der Verbrennungsluft eingerichtet sein. Der Brennstoffverbrauch kann noch weiter reduziert werden.

Vorzugsweise kann der mindestens eine zweite Elektroerhitzer der Wärmerückgewinnungsvorrichtung nachgeschaltet sein. Mit anderen Worten, der mindestens eine zweite Elektroerhitzer kann in dem Teilstück der Zuführleitung zwischen dem Brennraum und der Wärmerückgewinnungsvorrichtung angeordnet sein. Der mindestens eine zweite Elektroerhitzer kann eingerichtet sein zum (weiteren) Erwärmen der bereits durch die Wärmerückgewinnungsvorrichtung vorgewärmten Verbrennungsluft. Der Brennstoffverbrauch des Brennraums kann noch weiter reduziert werden. Der Brennstoffverbrauch kann noch weiter reduziert werden.

Gemäß einer weiteren bevorzugten Ausführungsform der erfindungsgemäßen Ammoniak-Cracking-Anlage kann der zweite Elektroerhitzer ein Lufterhitzer sein. Ein Lufterhitzer kann in einfacher Weise in der Zuführleitung angeordnet werden und ist insbesondere besonders geeignet, die in den Brennraum geleitete Verbrennungsluft (noch weiter) zu erwärmen.

Gemäß einer besonders bevorzugten Ausführungsform der erfindungsgemäßen Ammoniak-Cracking-Anlage kann die Ammoniak-Cracking-Anlage mindestens eine Steuervorrichtung umfassen. Die mindestens eine Steuervorrichtung kann eingerichtet sein zumindest zum Steuern des mindestens einen Elektroerhitzers und des mindestens einen Brennraums, derart, dass der Cracking-Reaktor mit einer vordefinierten Temperatur betrieben wird. Vorzugsweise kann die Steuervorrichtung eingerichtet sein zum Steuern der Ammoniak-Cracking-Anlage.

Die Steuervorrichtung kann durch eine Datenverarbeitungsvorrichtung der Ammoniak-Cracking-Anlage zumindest teilweise gebildet sein bzw. in der Datenverarbeitungsvorrichtung implementiert sein. Die Datenverarbeitungsvorrichtung der Ammoniak-Cracking-Anlage kann aus einem oder mehreren Rechner/n gebildet sein und mindestens einen Prozessor umfassen. Der mindestens eine Prozessor (zusammen mit Speichermittel und dergleichen) kann eingerichtet sein zum Ausführen und/oder Steuern von Softwaremodulen. Beispielsweise kann die (zentrale) Steuervorrichtung in Form einer durch den Prozessor (zusammen mit Speichermittel und dergleichen) ausführbaren Steuerungssoftware gebildet sein.

Das Steuern des mindestens einen Elektroerhitzers (vorzugsweise sämtlicher Elektroerhitzer) und des mindestens einen Brennraums erfolgt insbesondere derart, dass der Cracking-Reaktor, insbesondere der Reaktorraum, mit einer vordefinierten Temperatur bzw. einer (einstellbaren) Solltemperatur betrieben wird. Das Steuern kann insbesondere ein Aufteilen der für den Betrieb des Cracking-Reaktors erforderlichen Gesamtwärmemenge auf eine erste Wärmemenge, die von dem Brennraum bereitgestellt wird, und einer zweiten Wärmemenge, die von dem mindestens einen Elektroerhitzer, beispielsweise dem ersten Elektroerhitzer, bereitgestellt wird. Mit anderen Worten, die Steuervorrichtung kann eingerichtet sein zum Bestimmen einer ersten Wärmemenge, die von dem Brennraum dem Cracking-Reaktor (insbesondere dem Reaktorraum) bereitgestellt wird, und einer zweiten Wärmemenge, die von dem mindestens einen Elektroerhitzer (insbesondere dem ersten Elektroerhitzer) dem Cracking-Reaktor (insbesondere dem Reaktorraum) bereitgestellt wird. Das Bestimmen der ersten Wärmemenge und der zweiten Wärmemenge erfolgt insbesondere derart, dass der Cracking-Reaktor mit einer vordefinierten Temperatur betrieben wird.

Die Steuervorrichtung kann eingerichtet sein zum Steuern (bzw. Regeln) zumindest des Brennraums und des mindestens einen Elektroerhitzers, basierend auf der bestimmten ersten Wärmemenge und der bestimmten zweiten Wärmemenge. Beispielsweise kann das Bestimmen der ersten Wärmemenge und der zweiten Wärmemenge (durch einen Betreiber) vordefiniert sein.

Gemäß einer besonders bevorzugten Ausführungsform der erfindungsgemäßen Ammoniak-Cracking-Anlage kann die Steuervorrichtung eingerichtet sein zum Empfangen mindestens eines Netzzustandsparameters eines mit dem mindestens einen Elektroerhitzers verbundenen elektrischen Versorgungsnetzes. Der mindestens eine Netzzustandsparameter kann zumindest die (augenblicklich) verfügbare überschüssige elektrische Energie in dem elektrischen Versorgungsnetz anzeigen, insbesondere die verfügbare und aus mindestens einer erneuerbaren Energiequelle (bzw. Erzeuger) stammende überschüssige elektrische Energie.

Der mindestens eine Netzzustandsparameter kann ein gemessener elektrischer Netzparameter sein, aus dem abgeleitet werden kann, wie (augenblicklich) das Verhältnis von eingespeister und entnommener Leistung ist. Zumindest kann aus dem mindestens einen elektrischen Netzparameter abgeleitet werden, ob (augenblicklich) mehr elektrische Leistung in das elektrische Versorgungsnetz eingespeist wird, als aus ihm entnommen wird. Insbesondere kann der elektrische Netzparameter eine Netzfrequenz des elektrischen Versorgungsnetzes sein. Bei Varianten der Erfindung kann der mindestens eine elektrische Netzparameter alternativ oder zusätzlich eine Netzspannung, ein Netzstrom und/oder dergleichen umfassen.

Alternativ oder zusätzlich kann der mindestens eine Netzzustandsparameter mindestens einen nicht-elektrische Parameter umfassen, aus dem abgeleitet werden kann, ob (augenblicklich) mehr elektrische Leistung in das elektrische Versorgungsnetz eingespeist wird, als aus ihm entnommen wird. Beispielsweise kann der mindestens eine Netzzustandsparameter mindestens einen (gemessenen) meteorologischen Parameter umfassen, aus dem die augenblicklich von regenerativen Erzeugern (z.B. Photovoltaikanlage und/oder Windkraftanlage) ins elektrische Versorgungsnetz eingespeiste Leistung zumindest schätzbar ist (beispielsweise, wenn die an das Versorgungsnetz angeschlossenen regenerativen Erzeuger bzw. deren Nennleistungen bekannt ist). Der mindestens eine meteorologische Parameter kann eine (augenblickliche) Bewölkung bzw. Bewölkungsgrad (insbesondere zusammen mit der Tageszeit) (im geographischen Gebiet des Versorgungsnetzes) und/oder ein (augenblicklicher) Windparameter (z.B. zumindest die Windstärke bzw. Windgeschwindigkeit) (im geographischen Gebiet des Versorgungsnetzes) umfassen.

Alternativ oder zusätzlich kann der mindestens eine nicht-elektrische Parameter einen (augenblicklichen) Strompreis für den Bezug von Strom bzw. Leistung aus dem elektrischen Versorgungsnetz umfassen. Insbesondere kann aus dem (augenblicklichen) Strompreis geschlossen werden, wie (augenblicklich) das Verhältnis von eingespeister und entnommener Leistung ist. Zumindest kann aus dem genannten nicht-elektrischen Parameter schätzbar sein, ob (augenblicklich) mehr elektrische Leistung in das elektrische Versorgungsnetz eingespeist wird, als aus ihm entnommen wird (dies ist insbesondere bei einem (niedrigen) Strompreis der Fall, der unterhalb des mittleren Strompreises liegt).

Vorzugsweise können zwei oder mehr der vorgenannten Netzzustandsparameter durch die Steuervorrichtung empfangen werden. Beispielsweise kann der Strompreis und/oder die Netzfrequenz und insbesondere zwei meteorologische Parameter empfangen werden, wie Bewölkungsgrad und Windgeschwindigkeit.

Die Steuervorrichtung kann insbesondere eingerichtet sein zum Steuern des mindestens einen Elektroerhitzers und des mindestens einen Brennraums, basierend auf dem empfangenen mindestens einen Netzzustandsparameter (vorzugsweise aus den empfangenen zwei oder mehr der vorgenannten Netzzustandsparameter). Insbesondere kann das Bestimmen der ersten Wärmemenge und der zweiten Wärmemenge auf dem mindestens einen Netzzustandsparameter basieren.

Gemäß einer weiteren bevorzugten Ausführungsform der erfindungsgemäßen Ammoniak-Cracking-Anlage kann die Steuervorrichtung eingerichtet sein zum Steuern des mindestens einen Elektroerhitzers und des mindestens einen Brennraums, basierend auf dem empfangenen Netzzustandsparameter und mindestens einer vordefinierten Steuerregel. Die mindestens eine vordefinierte Steuerregel kann insbesondere als ausführbarer Algorithmus in der genannten Steuervorrichtung bzw. Datenverarbeitungsvorrichtung implementiert sein.

Die mindestens eine vordefinierte Steuerregel kann insbesondere vorgeben, dass der durch den mindestens einen Elektroerhitzer bereitgestellte Anteil an Wärme an der für den Cracking-Reaktor bereitgestellten Gesamtwärme umso größer ist, je mehr verfügbare überschüssige elektrische Energie in dem elektrischen Versorgungsnetz verfügbar ist. Insbesondere kann die erste Wärmemenge und die zweite Wärmemenge durch die Steuervorrichtung bestimmt werden, abhängig von der mindestens einen Steuerregel und dem mindestens einen empfangenen Netzzustandsparameter. Insbesondere kann die Steuerregel eine Zuordnung zwischen zumindest zwei unterschiedlichen Netzzustandsparameterwerten des mindestens Netzzustandsparameters und der ersten Wärmemenge und der zweiten Wärmemenge sein bzw. vorgeben.

In einem einfachen Fall kann vorgesehen sein, dass bei einem Netzzustandsparameter, der anzeigt, dass (augenblicklich) mehr elektrische Leistung in das elektrische Versorgungsnetz eingespeist wird, als ihm entnommen wird, die erste Wärmemenge einen Anteil zwischen 0 % und 40 % (z.B. 0 %) und die zweite Wärmemenge einen (entsprechenden) Anteil von 60 % bis 100 % (z.B. 100 %) an der erforderlichen Gesamtwärmemenge des Cracking-Reaktors hat, während bei einem Netzzustandsparameter, der anzeigt, dass (augenblicklich) weniger elektrische Leistung in das elektrische Versorgungsnetz eingespeist wird, als ihm entnommen wird, die zweite Wärmemenge einen Anteil zwischen 0 % und 40 % (z.B. 0 %) und die erste Wärmemenge einen (entsprechenden) Anteil von 60 % bis 100 % (z.B. 100 %) an der erforderlichen Gesamtwärmemenge hat. Es versteht sich, dass mehr als zwei unterschiedliche Netzzustandsparameterwerte des mindestens einen Netzzustandsparameters mit entsprechenden Zuordnungen und/oder zwei oder mehr Netzzustandsparameter in der Steuerregel abgebildet sein können.

Gemäß einer weiteren bevorzugten Ausführungsform der erfindungsgemäßen Ammoniak-Cracking-Anlage kann die Steuervorrichtung eingerichtet sein zum Empfangen mindestens eines prognostizierten (zeitlichen bzw. zeitabhängigen) Netzzustandsparameterverlaufs eines mit dem mindestens einen Elektroerhitzers verbundenen elektrischen Versorgungsnetzes.

Der mindestens eine prognostizierte Netzzustandsparameter eines prognostizierten Netzzustandsparameterverlaufs kann zumindest die für einen zukünftigen Prognosezeitraum prognostizierte verfügbare überschüssige elektrische Energie in dem elektrischen Versorgungsnetz anzeigen, insbesondere die verfügbare und aus erneuerbaren Energiequellen bzw. Erzeugern stammende überschüssige elektrische Energie.

Ein prognostizierter Netzzustandsparameterverlauf meint vorliegend insbesondere einen geschätzten Werteverlauf eines (zuvor beschriebenen)

Netzzustandsparameters für einen definierten zukünftigen Prognosezeitraums (z.B. zwischen 15 Minuten und 2 Wochen). Insbesondere kann anhand des mindestens einen prognostizierten Netzzustandsparameterverlauf zumindest abgeschätzt werden, wie sich das Verhältnis zwischen entnommener und in das Versorgungsnetz eingespeister elektrischer Leistung in dem Prognosezeitraum vermutlich entwickeln wird. So kann aus dem mindestens einen Netzzustandsparameterverlauf (vorzugsweise einer Mehrzahl von unterschiedlichen Netzzustandsparameterverläufen) zumindest abgeschätzt werden, ob und wann in dem zukünftigen Prognosezeitraum mehr elektrische Leistung in das elektrische Versorgungsnetz eingespeist wird, als ihm entnommen wird. Insbesondere kann ein prognostizierter Netzzustandsparameterverlauf mindestens einen prognostizierten elektrischen Parameterverlauf mindestens eines zuvor beschriebenen elektrischen Netzparameters und/oder mindestens einen prognostizierten nicht-elektrischen Parameterverlauf eines zuvor beschriebenen nicht-elektrischen Parameters umfassen.

Die Steuervorrichtung kann eingerichtet sein zum Erstellen eines (zukünftigen) (Steuer-)Fahrplans zum Steuern der Ammoniak-Cracking-Anlage, zumindest basierend auf dem mindestens einen empfangenen prognostizierten Netzzustandsparameter. Der (zeitabhängige) Fahrplan kann vorgeben, wie in einem zukünftigen Zeitraum insbesondere in dem genannten zukünftigen Prognosezeitraum, die Ammoniak-Cracking-Anlage zu fahren ist bzw. zu betreiben ist. In dem Fahrplan können insbesondere zumindest eine erste zeitabhängige Wärmemenge und eine zweite zeitabhängige Wärmmenge definiert sein. Die Steuervorrichtung kann eingerichtet sein zum Steuern der Ammoniak-Cracking-Anlage, basierend auf dem erstellten Fahrplan.

Das Steuern der Ammoniak-Cracking-Anlage kann zumindest ein Steuern des mindestens einen Elektroerhitzers und des mindestens einen Brennraums umfassen, derart, dass der Cracking-Reaktor mit einer vordefinierten Temperatur und entsprechend dem erstellten Fahrplan betrieben wird. Insbesondere kann das Steuern des mindestens einen Elektroerhitzers und des mindestens einen Brennraums erfolgen, basierend auf der in dem Fahrplan definierten ersten zeitabhängige Wärmemenge und der in dem Fahrplan definierten zweiten zeitabhängige Wärmmenge.

Besonders vorteilhaft ist es, wenn der Fahrplan durch die Steuervorrichtung derart bestimmt wird, dass die zweite zeitabhängige Wärmemenge zumindest höher ist als die erste zeitabhängige Wärmemenge, wobei insbesondere Flexibilitäten während des zukünftigen Zeitraums, insbesondere Prognosezeitraums, berücksichtigt werden können. Insbesondere kann der Fahrplan erstellt werden, derart, dass eine möglichst CO2-arme und gleichzeitig kostengünstige Wasserstoffproduktion erfolgen kann.

Gemäß einer weiteren bevorzugten Ausführungsform der erfindungsgemäßen Ammoniak-Cracking-Anlage kann die Steuervorrichtung eingerichtet sein zum Erstellen des Fahrplans zum Steuern der Ammoniak-Cracking-Anlage, zumindest basierend auf dem empfangenen prognostizierten Netzzustandsparameterverlauf und einer bis zu einem zukünftigen Produktionszeitpunkt zu produzierenden Wasserstoffmenge. Insbesondere können hierdurch Flexibilitäten während des Betriebs der Ammoniak-Cracking-Anlage genutzt werden, um den Anteil der zweiten Wärmemenge (insbesondere in Zeiten von Leitungsüberschuss) zu maximieren, wobei der zum Betrieb des mindestens einen Elektroerhitzers insbesondere überschüssige elektrische Energie des elektrischen Versorgungsnetzes genutzt wird, insbesondere die verfügbare und aus erneuerbaren Energiequellen bzw. Erzeugern stammende überschüssige elektrische Energie.

Vorzugsweise kann mindestens eine weitere Steuerregel (oder auch die vorherige Steuerregel) vorgeben, dass der Cracking-Reaktor (immer dann) in einer Zeitspanne mit Volllast betrieben wird (und damit mit maximalen Energieverbrauch), wenn der mindestens eine Netzzustandsparameterverlauf (bzw. Netzzustandsparameter) anzeigt, dass in dieser Zeitspanne mehr elektrische Leistung (insbesondere durch regenerative Erzeuger) in das elektrische Versorgungsnetz eingespeist wird, als (gleichzeitig) entnommen wird. Die weitere Steuerregel kann mit der vorgenannten Steuerregel kombiniert werden. Mit anderen Worten, die weitere Steuerregel kann vorgeben, dass der Cracking-Reaktor zumindest dann unter Volllast betrieben wird, wenn (viel) überschüssige (und CO2-arme) elektrische Energie des elektrischen Versorgungsnetzes verfügbar ist, insbesondere aus erneuerbaren Energiequellen bzw. Erzeugern stammende überschüssige elektrische Energie. Insbesondere wird in diesem Fall die zweite Wärmemenge, die durch den mindestens einen Elektroerhitzer bereitgestellt wird, maximiert.

Ferner kann die weitere Steuerregel vorgeben, dass der Cracking-Reaktor (immer dann) in einer Zeitspanne mit zumindest einer geringeren Last als Volllast betrieben wird (und damit mit einem geringeren Energieverbrauch), wenn der mindestens eine Netzzustandsparameterverlauf (bzw. Netzzustandsparameter) anzeigt, dass in dieser Zeitspanne weniger elektrische Leistung (insbesondere durch regenerative Erzeuger) in das elektrische Versorgungsnetz eingespeist wird, als (gleichzeitig) entnommen wird (und insbesondere gleichzeitig die bis zu dem zukünftigen Produktionszeitpunkt (z.B. Ende des Prognosezeitraums) zu produzierende Wasserstoffmenge geringer ist als die bis zu diesem zukünftigen Produktionszeitpunkt maximal produzierbare Wasserstoffmenge.

Beispielsweise kann der Prognosezeitraum aus einem ersten Teilzeitraum, während dem der mindestens eine Netzzustandsparameterverlauf (bzw. Netzzustandsparameter) anzeigt, dass in diesem Teilzeitraum weniger elektrische Leistung (insbesondere durch regenerative Erzeuger) in das elektrische Versorgungsnetz eingespeist wird, als (gleichzeitig) entnommen wird, und einem zweiten Teilzeitraum gebildet sein, während dem der mindestens eine Netzzustandsparameterverlauf (bzw. Netzzustandsparameter) anzeigt, dass in diesem Teilzeitraum mehr elektrische Leistung (insbesondere durch regenerative Erzeuger) in das elektrische Versorgungsnetz eingespeist wird, als (gleichzeitig) entnommen wird. Gleichzeitig kann beispielsweise die vordefinierte und bis zum Ende des Prognosezeitraums zu produzierende Wasserstoffmenge geringer sein als die maximal während des Prognosezeitraums produzierbare Wasserstoffmenge. Die Steuervorrichtung kann den Fahrplan derart erstellen, dass während des zweiten Teilzeitraums der Cracking-Reaktor unter Volllast betrieben und möglichst viel zweiter Energiemenge von dem mindestens einen Elektroerhitzer bereitgestellt wird (der Wärmeenergieverbrauch also maximiert ist), während in dem ersten Teilzeitraum der Wärmeenergieverbrauch minimiert und nur so viel Wasserstoff produziert wird, dass am Ende des Prognosezeitraums die zu produzierende Wasserstoffmenge produziert ist (und zumindest im Wesentlichen nicht mehr Wasserstoff).

Gemäß einer weiteren Ausführungsform der erfindungsgemäßen Ammoniak-Cracking-Anlage kann die Steuervorrichtung eingerichtet sein zum Anpassen des erstellten Fahrplans, basierend auf einem empfangenen (augenblicklichen) Netzzustandsparameter und/oder einer geänderten zu produzierenden Wasserstoffmenge. Insbesondere dann, wenn der augenblickliche Netzzustandsparameter gegenüber dem prognostizierten Netzzustandsparameter und/oder die zu produzierende Wasserstoffmenge gegenüber der ursprünglich zu produzierenden Wasserstoffmenge geändert hat, kann der Fahrplan entsprechend angepasst werden. Die Steuervorrichtung kann eingerichtet sein zum Steuern der Ammoniak-Cracking-Anlage entsprechend dem angepassten Fahrplan. Eine zuverlässige und effiziente Wasserstoffproduktion kann auch bei geänderten Bedingungen sichergestellt werden.

Ein weiterer Aspekt der Erfindung ist ein Verfahren zum Betreiben einer Ammoniak-Cracking-Anlage, insbesondere einer zuvor beschriebenen Ammoniak-Cracking-Anlage. Die Ammoniak-Cracking-Anlage umfasst mindestens einen Cracking-Reaktor mit einem Fluideingang und einem Fluidausgang, eingerichtet zum Generieren von Wasserstoff, basierend auf über den Fluideingang zugeführtem Ammoniak, und mindestens einen Brennraum, eingerichtet zum Bereitstellen von Wärme für den Cracking-Reaktor durch Verbrennen mindestens eines Brennstoffs. Das Verfahren umfasst:
- Bereitstellen, durch mindestens einen Elektroerhitzer, von Wärme für den Cracking-Reaktor durch Umwandeln von elektrischer Energie in Wärme.

Ein noch weiterer Aspekt der Erfindung ist eine Verwendung mindestens eines Elektroerhitzers in einer Ammoniak-Cracking-Anlage, insbesondere einer zuvor beschriebenen Ammoniak-Cracking-Anlage, zum Bereitstellen von Wärme für mindestens einen Cracking-Reaktor der Ammoniak-Cracking-Anlage durch Umwandeln von elektrischer Energie in Wärme.

Ein noch weiterer Aspekt ist eine (zuvor beschriebene) Steuervorrichtung zum Steuern einer Ammoniak-Cracking-Anlage nach einem der vorherigen Ansprüche 1 bis 13, wobei die Steuervorrichtung eingerichtet ist zum:
- Empfangen mindestens eines Netzzustandsparameters eines mit dem mindestens einen Elektroerhitzers verbundenen elektrischen Versorgungsnetzes, wobei der mindestens eine Netzzustandsparameter zumindest die verfügbare überschüssige elektrische Energie in dem elektrischen Versorgungsnetz anzeigt, insbesondere die verfügbare und aus erneuerbaren Energiequellen stammende überschüssige elektrische Energie, und
- Steuern des mindestens einen Elektroerhitzers und des mindestens einen Brennraums, basierend auf dem empfangenen Netzzustandsparameter.

Wie beschrieben wurde, kann die Steuervorrichtung eine software-basierte Steuervorrichtung sein, die von einer (zuvor beschriebenen) Datenverarbeitungsvorrichtung ausführbar ist.

Die zuvor beschriebenen Vorrichtungen (z.B. Steuerungsvorrichtung etc.) sind vorzugsweise zumindest teilweise Softwareelemente (z.B. ausführbarer Code) und können von einem Prozessor einer Datenverarbeitungsvorrichtung ausgeführt werden. Es sei ferner angemerkt, dass Begriffe, wie "erste"; "zweite" etc. nicht eine Reihenfolge angeben, sondern insbesondere zur Unterscheidung zweier Elemente (z.B. Wärmemenge etc.) dienen.

Die Merkmale der Ammoniak-Cracking-Anlagen, Verfahren, Steuervorrichtungen und Verwendungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die erfindungsgemäße Ammoniak-Cracking-Anlage, das erfindungsgemäße Verfahren, die erfindungsgemäße Steuervorrichtung und die erfindungsgemäße Verwendung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Beispiels einer Ammoniak-Cracking-Anlage des Stands der Technik,
- Fig. 2: eine schematische Ansicht eines Ausführungsbeispiels einer Ammoniak-Cracking-Anlage gemäß der vorliegenden Erfindung,
- Fig. 3: eine schematische Ansicht eines weiteren Ausführungsbeispiels einer Ammoniak-Cracking-Anlage gemäß der vorliegenden Erfindung,
- Fig. 4: ein Diagramm eines Ausführungsbeispiels eines Verfahrens gemäß der vorliegenden Erfindung,

Nachfolgend werden für ähnliche Elemente ähnliche Bezugszeichen verwendet.

Die Figur 2 zeigt eine schematische Ansicht eines Ausführungsbeispiels einer Ammoniak-Cracking-Anlage 200 gemäß der vorliegenden Erfindung. Die erfindungsgemäße Ammoniak-Cracking-Anlage 200 dient dem Herstellen von Wasserstoff. Ausgangsstoff ist hierbei bereitgestelltes Ammoniak.

Die Ammoniak-Cracking-Anlage 200 umfasst mindestens einen Cracking-Reaktor 202. Über eine Fluideingangsleitung 208 und einem Fluideingang 204 kann das Ammoniak dem Cracking-Reaktor 202 zugeführt werden, insbesondere einem (nicht gezeigten) Reaktorraum des Cracking-Reaktor 202.

Insbesondere kann die Ammoniak-Cracking-Anlage 200 eine (nicht gezeigte) Ammoniakquelle umfassen, beispielsweise in Form eines Ammoniakzwischenspeicher. Beispielsweise können Transportfahrzeuge Ammoniak anliefern und in die Ammoniakquelle füllen. Die Ammoniakquelle kann (mittelbar oder unmittelbar) mittels der Fluideingangsleitung 208 mit dem Cracking-Reaktor 202 verbunden sein.

Der Cracking-Reaktor 202 umfasst mindestens einen Fluidausgang 206. Der Fluidausgang 206 ist zumindest eingerichtet zum Ausleiten des hergestellten Wasserstoffs bzw. des Wasserstoffgemisch, enthaltend den generierten Wasserstoff. Es versteht sich, dass weitere Fluidausgänge vorgesehen sein können, beispielsweise für den Stickstoff.

Der Cracking-Reaktor 202 ist insbesondere ein thermisch-arbeitender Cracking-Reaktor 202. Dies meint insbesondere, dass der Cracking-Prozess bzw. Aufspaltungsprozess unter Anwendung von Wärme (und beispielsweise Druck) durchgeführt wird. Insbesondere kann zumindest der Reaktorraum des Cracking-Reaktors 202 mit einer vordefinierten Temperatur betrieben werden, die vorzugsweise zwischen 700 °C und 800 °C liegen kann.

Zum Bereitstellen der Wärme bzw. der thermischen Energie (die Wärmeübertragung ist angedeutet durch den Pfeil 226 und durch den Pfeil 232) umfasst die Ammoniak-Cracking-Anlage 200 mindestens einen Brennraum 212 und mindestens einen Elektroerhitzer 230.

Der Brennraum 212 umfasst mindestens einen Brennstoffeingang 214, insbesondere eingerichtet zum Einleiten von mindestens einem Brennstoff in den Brennraum 212. Insbesondere kann eine Brennstoffeingangsleitung 220 mit dem Brennstoffeingang 214 verbunden sein. Von einer (nicht gezeigten) Brennstoffquelle (der Ammoniak-Cracking-Anlage 200) kann Brennstoff (z.B. Erdgas, Wasserstoff, Ammoniak und/oder dergleichen) über die Brennstoffeingangsleitung 220 und den Brennstoffeingang 214 in den Brennraum 212 eingeleitet werden.

Der Brennraum 212 kann mindestens einen Verbrennungslufteingang 216 umfassen, der mit einer Zuführleitung 222 verbunden ist. Der Brennraum 212 ist eingerichtet zum Verbrennen des Brennstoffs zusammen mit der Verbrennungsluft und zum Liefern der dadurch erzeugten Wärme bzw. Wärmeenergie an den Cracking-Reaktor 202. Das beim Verbrennen entstehende Rausgasgemisch kann über einen Rauchgasausgang 218 des Brennraums und einer daran angeschlossenen Rauchgasausgangsleitung 224 abgeleitet werden, insbesondere an einen (nicht gezeigten) Schornstein (der Ammoniak-Cracking-Anlage 200).

Erfindungsgemäß umfasst die Ammoniak-Cracking-Anlage 200 mindestens einen Elektroerhitzer. Der mindestens eine Elektroerhitzer 230 ist eingerichtet zum Umwandeln von elektrischer Energie in Wärmeenergie. Insbesondere kann der Elektroerhitzer 230 über eine elektrische Verbindung 236 mit einem elektrischen Versorgungsnetz 234 und/oder einer mindestens einer anderen (nicht gezeigten) Energiequelle (wie ein Windpark, ein Photovoltaikpark und/oder dergleichen) verbunden sein. Die von dem elektrischen Versorgungsnetz 234 und/oder der mindestens einen anderen Energiequelle bereitgestellte elektrische Energie wandelt der Elektroerhitzer 230 in Wärme bzw. Wärmeenergie um. Die generierte Wärmeenergie wird insbesondere an den Cracking-Reaktor 202 übertragen.

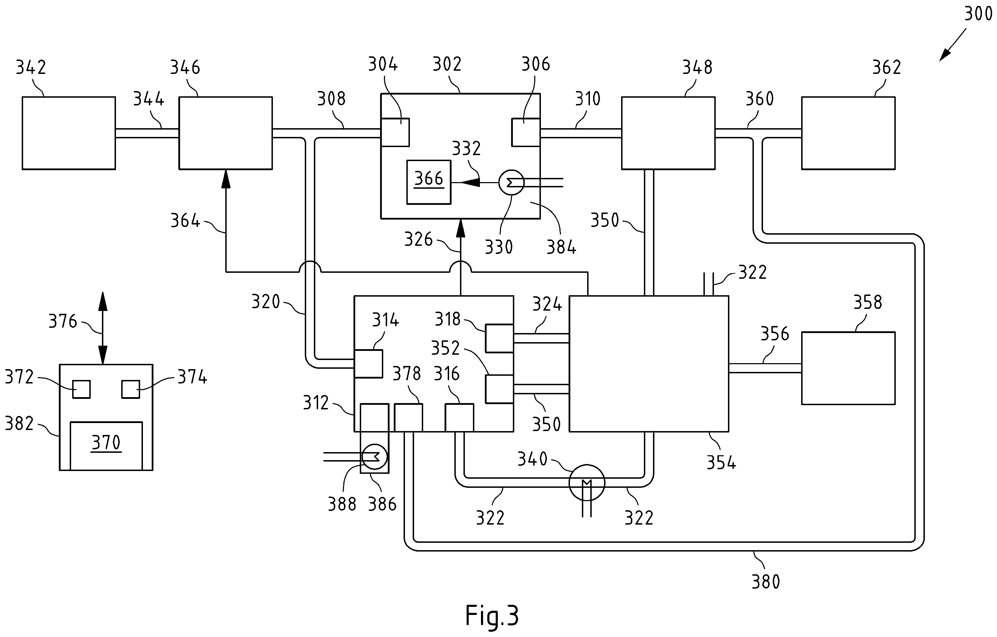

Die Figur 3 zeigt eine schematische Ansicht eines weiteren, bevorzugten Ausführungsbeispiels einer Ammoniak-Cracking-Anlage 300 gemäß der vorliegenden Erfindung. Zur Vermeidung von Wiederholungen werden nachfolgend im Wesentlichen nur die Unterschiede zu dem vorherigen Ausführungsbeispiel beschrieben und ansonsten insbesondere auf die Ausführungen zur Figur 2 verwiesen wird.

Die Ammoniak-Cracking-Anlage 300 umfasst einen Cracking-Reaktor 302 mit einem Fluideingang 304 und einem Fluidausgang 306 und einen Brennraum 312, eingerichtet zum Bereitstellen (die Wärmeübertragung ist durch den Pfeil 326 angedeutet) von Wärme für bzw. an den Cracking-Reaktor 302 durch Verbrennen mindestens eines Brennstoffs.

Die dargestellte Ammoniak-Cracking-Anlage 300 umfasst insbesondere eine Ammoniakquelle 342, wie einen Ammoniakzwischenspeicher oder einen Ammoniakpipelineanschluss und/oder dergleichen. Beispielsweise kann das (flüssige) Ammoniak über Transportfahrzeuge und/oder ein Pipelinenetz geliefert werden.

Das insbesondere flüssige Ammoniak kann über eine Fluidleitung 344 der Ammoniak-Cracking-Anlage 300 einer Vorwärmvorrichtung 346 der Ammoniak-Cracking-Anlage 300 bereitgestellt werden. Die Vorwärmvorrichtung 346 ist insbesondere zwischen der Ammoniakquelle 342 und dem Cracking-Reaktor 302 zwischengeschaltet. Die Vorwärmvorrichtung 346 ist insbesondere eingerichtet zum Vorwärmen des flüssigen Ammoniaks. Das vorgewärmte Ammoniak kann über die Fluideingangsleitung 308 und den Fluideingang 304 in den Cracking-Reaktor 302 eingeleitet werden.

Ferner kann das durch den Cracking-Reaktor 302 unter Anwendung thermischer Energie hergestellte Wasserstoffgemisch, enthaltend den generierten Wasserstoff, über den Fluidausgang 306 und die Fluidausgangsleitung 310 einer optionalen Wasserstoffseparationsvorrichtung 348 bzw. Wasserstoffreinigungsvorrichtung der Ammoniak-Cracking-Anlage 300 bereitgestellt werden. Die Wasserstoffseparationsvorrichtung 348 kann eingerichtet sein zum Aufreinigen bzw. Reinigen des durch den Cracking-Reaktor 302 generierten. Wasserstoffgemisches. Beispielsweise kann das Reinigen ein Trocken des Wasserstoffgemisches und/oder Komprimieren des Wasserstoffgemisches und/oder ein Durchführen einer Druckwechseladsorption (PSA), ein Durchführen einer Membrantrennung und/oder eine elektrochemische Trennung und/oder dergleichen umfassen.

Der hergestellte und gereinigte Wasserstoff kann über eine weitere Fluidleitung 360 an eine Wasserstoffzielentität 362 (z.B. ein Wasserstoffzwischenspeicher, ein Wasserstoffpipelinenetz, ein Wasserstofftransportfahrzeug, Wasserstoffabnehmer und/oder dergleichen) geleitet werden.

Ferner kann das von dem gereinigten Wasserstoff getrennte Gasgemisch über einen weiteren Ausgang der Wasserstoffseparationsvorrichtung 348 und eine zweite Brennstoffeingangsleitung 350 aus der Wasserstoffseparationsvorrichtung 348 abgeführt werden.

Der Brennraum 312 umfasst mindestens einen Brennstoffeingang 314, 352, 378 vorliegend beispielhaft und bevorzugt einen ersten Brennstoffeingang 314, einen zweiten Brennstoffeingang 352 und einen dritten Brennstoffeingang 378. Wie aus der Figur 3 zu erkennen ist, ist der erste Brennstoffeingang 314 mittels einer ersten Brennstoffeingangsleitung 320 mit der Fluideingangsleitung 308 verbunden. Über den ersten Brennstoffeingang 314 kann insbesondere Ammoniak als Brennstoff zugeführt werden. Der zweite Brennstoffeingang 352 ist insbesondere eingerichtet, das von dem gereinigten Wasserstoff getrennte Gasgemisch in den Brennraum 312 einzuleiten. Dieses Gasgemisch kann insbesondere brennbare Bestandteile umfassen und als Brennstoff dem Brennraum 312 zugeführt werden. Hierzu kann eine zweite Brennstoffeingangsleitung 350 vorgesehen sein. Der dritte Brennstoffeingang 378 ist insbesondere eingerichtet zum Einleiten von gereinigtem (z.B. überschüssigen) Wasserstoff. Hierzu kann eine dritte Brennstoffeingangsleitung 380 vorgesehen sein.

Es versteht sich, dass bei weiteren Varianten der Erfindung weitere Brennstoffeingänge vorgesehen sein können, beispielsweise für einen weiteren Brennstoff, wie Erdgas. Darüber hinaus versteht es sich, dass auch weniger Brennstoffeingänge vorgesehen sein können. Beispielsweise kann auch ein Brennstoffeingang zum Einspeisen zweier unterschiedlicher Brennstoffe verwendet werden.

Vorzugsweise und wie dargestellt kann die Ammoniak-Cracking-Anlage 300 eine Wärmerückgewinnungsvorrichtung 354 umfassen. Das beim Verbrennen entstehende Rauchgasgemisch kann von einem Rauchgasausgang 318 über eine Rausgasleitung 324 an die Wärmerückgewinnungsvorrichtung 354 geleitet werden. Die Wärmerückgewinnungsvorrichtung 354 ist insbesondere zum Reinigen des beim Verbrennen entstehenden Rauchgasgemisches eingerichtet, derart, dass das gereinigte Rauchgasgemisch über eine weitere Leitung 356 und einen Schornstein 358 (der Ammoniak-Cracking-Anlage 300) an die Umgebung abgegeben werden kann.

Vorzugsweise kann die Wärmeenergie des bei dem Verbrennen entstehenden Rauchgasgemisches verwendet werden zum Vorwärmen beispielsweise des Ammoniaks (eine Wärmeübertragung ist mit dem Pfeil 364 angedeutet). Insbesondere kann die Vorwärmvorrichtung 346 mit thermischer Energie des Rauchgasgemisches versorgt werden.

Optional und bevorzugt kann das von dem gereinigten Wasserstoff getrennte Gasgemisch durch die Wärmerückgewinnungsvorrichtung 354 vorgewärmt werden. Insbesondere kann die zweite Brennstoffeingangsleitung 350 durch die Wärmerückgewinnungsvorrichtung 354 hindurch zu dem zweiten Brennstoffeingang 352 geführt sein. Beispielsweise kann die Brennstoffeingangsleitung 350 schleifenförmig und/oder mäanderförmig in der Wärmerückgewinnungsvorrichtung 354 verlaufen. Das warme Rauchgasgemisch kann die Brennstoffeingangsleitung 350 innerhalb der Wärmerückgewinnungsvorrichtung 354 umströmen, derart, dass das genannte Gasgemisch erwärmt wird.

Optional und bevorzugt kann die Verbrennungsluft durch die Wärmerückgewinnungsvorrichtung 354 vorgewärmt werden. Insbesondere kann die aus der Umgebung in eine Zuführleitung 322 angesaugte Verbrennungsluft durch die Wärmerückgewinnungsvorrichtung 354 hindurch zu dem einem Verbrennungslufteingang 316 geführt sein. Beispielsweise kann die Zuführleitung 322 schleifenförmig und/oder mäanderförmig in der Wärmerückgewinnungsvorrichtung 354 verlaufen. Das warme Rauchgasgemisch kann die Zuführleitung 322 innerhalb der Wärmerückgewinnungsvorrichtung 354 umströmen, derart, dass die Verbrennungsluft erwärmt wird.

Es sei angemerkt, dass in dem (Fluid-)Leitungsnetz bzw. den genannten (Fluid-)Leitungen bzw. den Fluidausgängen und/oder -eingängen steuerbare Ventile angeordnet sein können, um den jeweiligen Fluidstrom von und/oder zu einer Einrichtung zu steuern. Lediglich zu Gunsten einer besseren Übersicht sind diese nicht in der Figur 3 dargestellt. Insbesondere können die genannten Ventile von einer Steuervorrichtung 370 gesteuert werden.

Vorzugsweise kann die Ammoniak-Cracking-Anlage über eine (zentrale) Steuervorrichtung 370 verfügen. Die Steuervorrichtung 370 kann in einer Datenverarbeitungsvorrichtung 382 implementiert sein oder diese bilden. Insbesondere kann die Steuervorrichtung 370 als Steuersoftwaremodul gebildet sein, ausführbar durch mindestens einen Prozessor 372 und mindestens ein Speichermittel 374 der Datenverarbeitungsvorrichtung 382.

Die dargestellte Ammoniak-Cracking-Anlage 300 umfasst mindestens einen Elektroerhitzer 330, 340, vorliegend insbesondere mindestens einen ersten Elektroerhitzer 330 und mindestens einen zweiten Elektroerhitzer 340.

Der erste Elektroerhitzer 330 kann an dem Cracking Reaktor 302 angeordnet sein, insbesondere in dem Cracking Reaktor 302 integriert sein. Vorzugsweise kann der erste Elektroerhitzer 330 in einer Reaktorwand 384 in (unmittelbarer) Nähe zu dem Reaktorraum 366 angeordnet sein. Besonders bevorzugt kann der erste Elektroerhitzer 330 ein Induktionserhitzer bzw. eine Induktionsheizung sein. Die Wärmeübertragung von dem Elektroerhitzer 330 zu dem Reaktorraum 366 ist insbesondere mit dem Pfeil 332 angedeutet.

Der zweite Elektroerhitzer 340 ist insbesondere eingerichtet zum Erwärmen der zugeführten Verbrennungsluft. Wie dargestellt ist, kann der zweite Elektroerhitzer 340 insbesondere in der Zuführleitung 322 integriert sein. Vorzugsweise kann der zweite Elektroerhitzer 340 in dem Teilstück der Zuführleitung 322 integriert sein, das zwischen der Wärmerückgewinnungsvorrichtung 354 und dem Brennraum 312 verläuft. Der zweite Elektroerhitzer 340 kann ein Lufterhitzer sein.

Optional kann mindestens ein weiterer Lufteingang 386 vorgesehen sein. Vorzugweise kann der mindestens eine weitere Lufteingang 386 einen weiteren Elektroerhitzer 388 umfassen.

Insbesondere kann die Verbrennungsluft durch den zweiten (und/oder) den weiteren Elektroerhitzer derart vorgewärmt werden, dass keine Verbrennung eines Brennstoffs mehr erforderlich ist.

Die Steuervorrichtung 370 kann zumindest eingerichtet sein zum Steuern der Wärmezufuhr zu dem mindestens einen Cracking-Reaktor 302 bzw. zum Steuern der Temperatur des Cracking-Reaktors 302 über ein drahtloses und/oder drahtgebundenes Datennetz 376. Insbesondere ist die Steuervorrichtung 370 eingerichtet zumindest zum Steuern des mindestens einen Elektroerhitzers 330, 340 und des mindestens einen Brennraums 312, derart, dass der Cracking-Reaktor 302 (bzw. der Reaktorraum 366) mit einer vordefinierten Temperatur (z.B. zwischen 700 °C und 800 °C) betrieben wird. Wie beschrieben, kann das ein Steuern bzw. Regeln von (nicht gezeigten) Ventilen und/oder Schaltern umfassen.

Die Steuervorrichtung 370 kann eingerichtet sein zum Steuern der Wärmezufuhr, basierend auf mindestens einer vordefinierten Steuerregel. Die mindestens eine Steuerregel (insbesondere ein ausführbarer Algorithmus) kann insbesondere vorgeben, dass die Ammoniak-Cracking-Anlage 300 mit einem möglichst geringen CO2-Fußabdruck und gleichzeitig möglichst kosteneffizient betrieben wird.

Um diese Steuerregel umzusetzen, kann insbesondere zumindest ein Netzzustandsparameter eines (nicht gezeigten) elektrischen Versorgungsnetzes bereitgestellt werden, aus dem insbesondere zumindest ableitbar ist, ob überschüssige elektrische Energie in dem elektrischen Versorgungsnetz zur Verfügung steht, insbesondere verfügbare und aus erneuerbaren Energiequellen stammende überschüssige elektrische Energie.

Wie bereits beschrieben wurde, kann der mindestens eine Netzzustandsparameter einen elektrischen Netzparameter umfassen, wie eine Netzfrequenz, aus der zumindest ableitbar ist, ob augenblicklich mehr Leistung in das Versorgungsnetz eingespeist wird als gleichzeitig aus dem Versorgungsnetz entnommen wird. Insbesondere ist allgemein aus der Netzfrequenz das Verhältnis zwischen (augenblicklich) eingespeister und aus dem Versorgungsnetz entnommener Leistung ableitbar. Alternativ oder vorzugsweise zusätzlich kann der mindestens eine Netzzustandsparameter einen (augenblicklichen) meteorologischen Parameter (z.B. Windgeschwindigkeit, Bewölkungsgrad und/oder dergleichen) umfassen, aus dem insbesondere abgeleitet werden kann (beispielsweise zusammen mit dem mindestens einen elektrischen Netzparameter), ob augenblicklich mehr Leistung in das Versorgungsnetz insbesondere durch regenerative Erzeuger eingespeist wird als gleichzeitig aus dem Versorgungsnetz entnommen wird. Alternativ oder vorzugsweise zusätzlich kann der mindestens eine Netzzustandsparameter einen (augenblicklichen) Strompreis für den Bezug von Strom bzw. Leistung aus dem elektrischen Versorgungsnetz umfassen. Insbesondere kann aus dem (augenblicklichen) Strompreis geschlossen werden, ob (augenblicklich) mehr elektrische Leistung in das elektrische Versorgungsnetz eingespeist wird, als aus ihm entnommen wird (dies ist insbesondere bei einem (niedrigen) Strompreis der Fall, der unterhalb des mittleren Strompreises liegt).

Das Steuern kann insbesondere ein Aufteilen der für den Betrieb des Cracking-Reaktors 302 erforderlichen Gesamtwärmemenge auf eine erste Wärmemenge, die von dem Brennraum 312 bereitgestellt wird, und einer zweite Wärmemenge, die von dem mindestens einen Elektroerhitzer 330, 340, beispielsweise dem ersten Elektroerhitzer 330, bereitgestellt wird. Insbesondere kann, gemäß der mindestens einen Steuerregel, der Anteil der zweiten Wärmemenge umso größer sein, je größer die überschüssige elektrische Energie in dem elektrischen Versorgungsnetz ist, insbesondere verfügbare und aus erneuerbaren Energiequellen stammende überschüssige elektrische Energie.

Besonders bevorzugt kann die Steuervorrichtung 370 einen Fahrplan zum Betreiben der Ammoniak-Cracking-Anlage 300 insbesondere für einen zukünftigen Prognosezeitraum (z.B. zwischen 1 h und 14 Tagen) erstellen, insbesondere basierend auf mindestens einem prognostizierten zeitlichen Verlauf mindestens eines zuvor genannten Netzzustandsparameters und insbesondere der während des Prognosezeitraums herzustellenden Wasserstoffs sowie der mindestens einen Steuerregel.

Insbesondere können in dem Prognosezeitraum Flexibilitäten beim Betrieb der Ammoniak-Cracking-Anlage 300 genutzt werden, insbesondere für eine möglichst kostengünstige und CO2-arme Wasserstoffsynthese. Beispielsweise kann die Steuervorrichtung 370 die Ammoniak-Cracking-Anlage 300 derart steuern, dass der Cracking-Reaktor 302 unter Volllast betrieben wird, also der Energieverbrauch hoch und der Wasserstoffertrag maximiert ist, wenn insbesondere im Versorgungsnetz überschüssige elektrische Energie, insbesondere von regenerativen Verbrauchern, verfügbar ist. Insbesondere kann die Steuervorrichtung 370 den mindestens einen Elektroerhitzer 330, 340 derart betreiben, dass die zweite Energiemenge während dieser Zeitdauer maximiert ist. Andererseits kann die Wasserstoffproduktion sowie der Energieverbrauch durch die Steuervorrichtung 370 reduziert werden, insbesondere durch Betreiben des Cracking-Reaktors 302 in einem Teillastbetrieb, wenn insbesondere im Versorgungsnetz keine überschüssige elektrische Energie verfügbar ist.

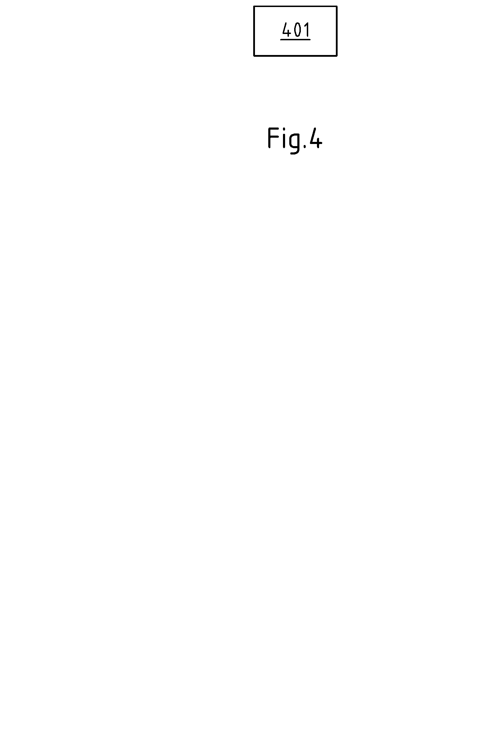

Die Figur 4 zeigt ein Diagramm eines Ausführungsbeispiels eines Verfahrens gemäß der vorliegenden Erfindung zum Betreiben einer Ammoniak-Cracking-Anlage, insbesondere einer Ammoniak-Cracking-Anlage gemäß der Figur 2 und/oder 3. Die Ammoniak-Cracking-Anlage umfasst mindestens einen Cracking-Reaktor mit einem Fluideingang und einem Fluidausgang, eingerichtet zum Generieren von Wasserstoff, basierend auf über den Fluideingang zugeführtem Ammoniak, und mindestens einen Brennraum, eingerichtet zum Bereitstellen von Wärme für den Cracking-Reaktor durch Verbrennen mindestens eines Brennstoffs.

In Schritt 401 erfolgt ein Bereitstellen, durch mindestens einen Elektroerhitzer, von Wärme für den Cracking-Reaktor durch Umwandeln von elektrischer Energie in Wärme, wie insbesondere zuvor beschrieben wurde.

Das Verfahren kann insbesondere ein Empfangen, durch eine Steuervorrichtung, mindestens eines Netzzustandsparameters eines mit dem mindestens einen Elektroerhitzers verbundenen elektrischen Versorgungsnetzes, wobei der mindestens eine Netzzustandsparameter zumindest die verfügbare überschüssige elektrische Energie in dem elektrischen Versorgungsnetz anzeigt, insbesondere die verfügbare und aus erneuerbaren Energiequellen stammende überschüssige elektrische Energie, und ein Steuern, durch die Steuervorrichtung, des mindestens einen Elektroerhitzers und des mindestens einen Brennraums, basierend auf dem empfangenen Netzzustandsparameter, umfassen, wie insbesondere zuvor beschrieben wurde.

### Bezugszeichenliste:

- 100: Ammoniak-Cracking-Anlage
- 102: Cracking-Reaktor
- 104: Fluideingang
- 106: Fluidausgang
- 108: Fluideingangsleitung
- 110: Fluidausgangsleitung
- 112: Brennraum
- 114: Brennstoffeingang
- 116: Verbrennungslufteingang
- 118: Rauchgasausgang
- 120: Brennstoffeingangsleitung
- 122: Zuführleitung
- 124: Rauchgasausgangsleitung
- 126: Pfeil (= Richtung der übertragenen Wärmemenge)
- 200: Ammoniak-Cracking-Anlage
- 202: Cracking-Reaktor
- 204: Fluideingang
- 206: Fluidausgang
- 208: Fluideingangsleitung
- 212: Brennraum
- 214: Brennstoffeingang
- 216: Verbrennungslufteingang
- 218: Rauchgasausgang
- 220: Brennstoffeingangsleitung
- 222: Zuführleitung
- 224: Rauchgasausgangsleitung
- 226: Pfeil (= Richtung der übertragenen Wärmemenge)
- 230: Elektroerhitzer
- 232: Pfeil (= Richtung der übertragenen Wärmemenge)
- 234: Versorgungsnetz
- 236: Verbindung
- 300: Ammoniak-Cracking-Anlage
- 302: Cracking-Reaktor
- 304: Fluideingang
- 306: Fluidausgang
- 308: Fluideingangsleitung
- 310: Fluidausgangsleitung
- 312: Brennraum
- 314: Brennstoffeingang
- 316: Verbrennungslufteingang
- 318: Rauchgasausgang
- 320: Brennstoffeingangsleitung
- 322: Zuführleitung
- 324: Rausgasleitung
- 326: Pfeil (= Richtung der übertragenen Wärmemenge)
- 330: Elektroerhitzer
- 332: Pfeil (= Richtung der übertragenen Wärmemenge)
- 340: Elektroerhitzer
- 342: Ammoniakquelle
- 344: Fluidleitung
- 346: Vorwärmvorrichtung
- 348: Wasserstoffseparationsvorrichtung
- 350: Brennstoffeingangsleitung
- 352: Brennstoffeingang
- 354: Wärmerückgewinnungsvorrichtung
- 356: Leitung
- 358: Schornstein
- 360: Fluidleitung
- 362: Wasserstoffzielentität
- 364: Pfeil (= Richtung der übertragenen Wärmemenge)
- 366: Reaktorraum
- 370: Steuervorrichtung
- 372: Prozessor
- 374: Speichermittel
- 376: Datennetz
- 378: Brennstoffeingang
- 380: Brennstoffeingangsleitung
- 382: Datenverarbeitungsvorrichtung
- 384: Reaktorwand
- 386: Verbrennungslufteingang
- 388: Elektroerhitzer
- 401: Schritt

## Patentansprüche

1. Ammoniak-Cracking-Anlage (200, 300), umfassend:
- mindestens einen Cracking-Reaktor (202, 302) mit einem Fluideingang (204, 304) und einem Fluidausgang (206, 306), eingerichtet zum Generieren von Wasserstoff, basierend auf über den Fluideingang (204, 304) zugeführtem Ammoniak,
- mindestens einen Brennraum (212, 312), eingerichtet zum Bereitstellen von Wärme für den Cracking-Reaktor (202, 302) durch Verbrennen mindestens eines Brennstoffs,
**dadurch gekennzeichnet, dass**
- die Ammoniak-Cracking-Anlage (200, 300) mindestens einen Elektroerhitzer (230, 330, 340, 388) umfasst, eingerichtet zum Bereitstellen von Wärme für den Cracking-Reaktor (202, 302) durch Umwandeln von elektrischer Energie in Wärme.

2. Ammoniak-Cracking-Anlage (200, 300) nach Anspruch 1, **dadurch gekennzeichnet, dass**
- der mindestens eine Elektroerhitzer (230, 330, 340, 388) mindestens einen ersten Elektroerhitzer (330) umfasst, der an dem Cracking-Reaktor (202, 302) angeordnet ist,
- wobei der erste Elektroerhitzer (330) insbesondere in dem Cracking-Reaktor (202, 302) integriert ist.

3. Ammoniak-Cracking-Anlage (200, 300) nach Anspruch, **dadurch gekennzeichnet, dass**
- der erste Elektroerhitzer (330) ein Induktionserhitzer ist.

4. Ammoniak-Cracking-Anlage (200, 300) nach einem der vorherigen Ansprüche, **dadurch gekennzeichnet, dass**
- der Brennraum (212, 312) mindestens einen Verbrennungslufteingang (216, 316, 386) umfasst, eingerichtet zum Zuführen von Verbrennungsluft in den Brennraum (212, 312), und
- der mindestens eine Elektroerhitzer (220, 330, 340, 388) einen zweiten Elektroerhitzer (340, 388) umfasst, der eingerichtet ist zum Erwärmen der zugeführten Verbrennungsluft.

5. Ammoniak-Cracking-Anlage (200, 300) nach Anspruch 4, **dadurch gekennzeichnet, dass**
- der zweite Elektroerhitzer (340) in einer Zuführleitung (222, 322) angeordnet ist, die eingerichtet ist zum Leiten der Verbrennungsluft zu dem Verbrennungslufteingang (216, 316).

6. Ammoniak-Cracking-Anlage (200, 300) nach Anspruch 4 oder 5, **dadurch gekennzeichnet, dass**
- der zweite Elektroerhitzer (340, 388) ein Lufterhitzer ist.

7. Ammoniak-Cracking-Anlage (200, 300) nach einem der vorherigen Ansprüche, **dadurch gekennzeichnet, dass**
- die Ammoniak-Cracking-Anlage (200, 300) mindestens eine Steuervorrichtung (370) umfasst, eingerichtet zumindest zum Steuern des mindestens einen Elektroerhitzers (230, 330, 340, 388) und des mindestens einen Brennraums (212, 312), derart, dass der Cracking-Reaktor (202, 302) mit einer vordefinierten Temperatur betrieben wird.

8. Ammoniak-Cracking-Anlage (200, 300) nach Anspruch 7, **dadurch gekennzeichnet, dass**
- die Steuervorrichtung (370) eingerichtet ist zum Empfangen mindestens eines Netzzustandsparameters eines mit dem mindestens einen Elektroerhitzer (230, 330, 340, 388) verbundenen elektrischen Versorgungsnetzes (234),
- wobei der mindestens eine Netzzustandsparameter zumindest die verfügbare überschüssige elektrische Energie in dem elektrischen Versorgungsnetz (234) anzeigt, insbesondere die verfügbare und aus erneuerbaren Energiequellen stammende überschüssige elektrische Energie, und
- die Steuervorrichtung (370) eingerichtet ist zum Steuern des mindestens einen Elektroerhitzers (230, 330, 340, 388) und des mindestens einen Brennraums (212, 312), basierend auf dem empfangenen Netzzustandsparameter.

9. Ammoniak-Cracking-Anlage (200, 300) nach Anspruch 8, **dadurch gekennzeichnet, dass**
- die Steuervorrichtung (370) eingerichtet ist zum Steuern des mindestens einen Elektroerhitzers (230, 330, 340, 388) und des mindestens einen Brennraums (212, 312), basierend auf dem empfangenen Netzzustandsparameter und mindestens einer vordefinierten Steuerregel,
- wobei die Steuerregel vorgibt, dass der durch den mindestens einen Elektroerhitzer (230, 330, 340, 388) bereitgestellte Anteil an Wärme an der für den Cracking-Reaktor (202, 302) bereitgestellten Gesamtwärme umso größer ist, je mehr verfügbare überschüssige elektrische Energie in dem elektrischen Versorgungsnetz (234) verfügbar ist.

10. Ammoniak-Cracking-Anlage (200, 300) nach einem der vorherigen Ansprüche 7 bis 9, **dadurch gekennzeichnet, dass**
- die Steuervorrichtung (370) eingerichtet ist zum Empfangen mindestens eines prognostizierten Netzzustandsparameterverlaufs eines mit dem mindestens einen Elektroerhitzers (230, 330, 340, 388) verbundenen elektrischen Versorgungsnetzes (234),
- wobei der mindestens eine Netzzustandsparameter zumindest die für einen zukünftigen Prognosezeitraum prognostizierte verfügbare überschüssige elektrische Energie in dem elektrischen Versorgungsnetz (234) anzeigt, insbesondere die verfügbare und aus erneuerbaren Energiequellen stammende überschüssige elektrische Energie,
- die Steuervorrichtung (370) eingerichtet ist zum Erstellen eines Fahrplans zum Steuern der Ammoniak-Cracking-Anlage (200, 300), zumindest basierend auf dem empfangenen prognostizierten Netzzustandsparameter, und
- die Steuervorrichtung (370) eingerichtet ist zum Steuern der Ammoniak-Cracking-Anlage (200, 300), basierend auf dem erstellten Fahrplan.

11. Ammoniak-Cracking-Anlage (200, 300) nach Anspruch 10, **dadurch gekennzeichnet, dass**
- die Steuervorrichtung (370) eingerichtet ist zum Erstellen des Fahrplans zum Steuern der Ammoniak-Cracking-Anlage (200, 300), zumindest basierend auf dem empfangenen prognostizierten Netzzustandsparameterverlauf und einer bis zu einem zukünftigen Produktionszeitpunkt zu produzierenden Wasserstoffmenge.

12. Ammoniak-Cracking-Anlage (200, 300) nach Anspruch 10 oder 11, **dadurch gekennzeichnet, dass**
- die Steuervorrichtung (370) eingerichtet ist zum Anpassen des erstellten Fahrplans, basierend auf einem empfangenen Netzzustandsparameter und/oder einer geänderten zu produzierenden Wasserstoffmenge.

13. Verfahren zum Betreiben einer Ammoniak-Cracking-Anlage (200, 300), insbesondere einer Ammoniak-Cracking-Anlage (200, 300) nach einem der vorherigen Ansprüche 1 bis 12, wobei die Ammoniak-Cracking-Anlage (200, 300) mindestens einen Cracking-Reaktor (202, 302) mit einem Fluideingang (204, 304) und einem Fluidausgang (206, 306), eingerichtet zum Generieren von Wasserstoff, basierend auf über den Fluideingang (204, 304) zugeführten Ammoniak, und mindestens einen Brennraum (212, 312) umfasst, eingerichtet zum Bereitstellen von Wärme für den Cracking-Reaktor (202, 302) durch Verbrennen mindestens eines Brennstoffs,
**dadurch gekennzeichnet, dass** das Verfahren umfasst:
- Bereitstellen, durch mindestens einen Elektroerhitzer (230, 330, 340, 388), von Wärme für den Cracking-Reaktor (202, 302) durch Umwandeln von elektrischer Energie in Wärme.

14. Verwendung mindestens eines Elektroerhitzers (230, 330, 340, 388) in einer Ammoniak-Cracking-Anlage (200, 300), insbesondere einer Ammoniak-Cracking-Anlage (200, 300) nach einem der vorherigen Ansprüche 1 bis 12, zum Bereitstellen von Wärme für mindestens einen Cracking-Reaktor (202, 302) der Ammoniak-Cracking-Anlage (200, 300) durch Umwandeln von elektrischer Energie in Wärme.

15. Steuervorrichtung (370) zum Steuern einer Ammoniak-Cracking-Anlage (200, 300) nach einem der vorherigen Ansprüche 1 bis 12, wobei die Steuervorrichtung eingerichtet ist zum:
- Empfangen mindestens eines Netzzustandsparameters eines mit dem mindestens einen Elektroerhitzers (230, 330, 340, 388) verbundenen elektrischen Versorgungsnetzes (234), wobei der mindestens eine Netzzustandsparameter zumindest die verfügbare überschüssige elektrische Energie in dem elektrischen Versorgungsnetz (234) anzeigt, insbesondere die verfügbare und aus erneuerbaren Energiequellen stammende überschüssige elektrische Energie, und
- Steuern des mindestens einen Elektroerhitzers (230, 330, 340, 388) und des mindestens einen Brennraums (212, 312), basierend auf dem empfangenen Netzzustandsparameter.
